# EUROPEAN PATENT APPLICATION

(11) **EP 4 800 599 A1**
(43) Date of publication of application: **02.09.2026**
(21) Application number: 25225407.3
(22) Date of filing: 19.12.2025
(51) Int. Cl.: G06F 40/216, G06F 40/30, G06F 40/35, G06T 11/60

(54) **COMPREHENSIVE ASSESSMENT OF INFOGRAPHIC IMAGES USING AESTHETICS ADHERENCE TO DATA AND TEXT (AADAT) SCORES**

(30) Priority: 27.02.2025 IN 202521017345
(71) Applicant: Tata Consultancy Services Limited, Maharashtra (IN)
(72) Inventor: BHAT, Savita Suhas, 411057 Pune (IN); KARANDE, Shirish Subhash, 411057 Pune (IN); DEO, Anurag, 411057 Pune (IN)
(74) Representative: Goddar, Heinz J.

(57) **Abstract**

Conventional techniques for evaluating generated infographic images, prioritize aspects like text alignment, data adherence, aesthetics, and overall quality, but often do not comprehensively assess adherence to underlying input data. Embodiments herein provide a method and system for comprehensive assessment of infographic images using Aesthetics Adherence to Data and Text (AADaT) Score. The method calculates a plurality of AADaT scores using the plurality of attribute scores for the plurality of generated infographic images. Further a plurality of LLM scores along with a plurality of feedback instructions are generated for each of the plurality of attributes, using the associated plurality of AADaT scores for the plurality of infographic images. An infographic evaluation model is trained with the plurality of infographic images, the plurality of feedback instructions, the plurality of AADaT scores, and the plurality of LLM scores, to generate a trained infographic evaluation model.

## Description

### CROSS-REFERENCE TO RELATED APPLICATIONS AND PRIORITY

The present application claims priority to Indian application no. 202521017345, filed on February 27, 2025.

### TECHNICAL FIELD

The disclosure herein generally relates to Large Language Models (LLMs), and, more particularly, to comprehensive assessment of infographic images using Aesthetics Adherence to Data and Text (AADaT) Scores.

### BACKGROUND

In recent times, blogging has evolved as a trusted and effective source of information dissemination. With blogs producing 67% more leads monthly, companies and individuals invest in generating top-quality blogs and articles targeting diverse domains such as technology, finance, health, and environment. Among these, many articles are highly informative yet often fail to captivate readers due to the absence of suitable infographics. Infographics, visual representations that elucidate textual and data-driven content, play a pivotal role in piquing reader interest by presenting information in a visually compelling manner. It is reported that bloggers who use more visuals get better results. The primary challenge in using appropriate infographics stems from the fact that many of these informative articles are authored by subject matter experts who possess deep domain knowledge but may lack proficiency in graphic design and infographic creation. This inability in producing engaging infographics significantly hampers the visibility and reach of their articles.

After generating the infographics, evaluating their quality becomes crucial. Typically, two methods are employed for this purpose: human evaluation, which involves significant time and effort from multiple evaluators, and automated metrics, which provide a more efficient alternative. Existing automated metrics for evaluating generated infographic images, such as Contrastive Language-Image Pretraining (CLIP) Score, and Frechet Inception Distance (FID), prioritize aspects like text alignment, image aesthetics, and overall quality, but often do not comprehensively assess adherence to underlying data alongside these criteria.

### SUMMARY

Embodiments of the present disclosure present technological improvements as solutions to one or more of the above-mentioned technical problems recognized by the inventors in conventional systems. For example, in one embodiment, a method for comprehensive assessment of infographic images using Aesthetics Adherence to Data and Text (AADaT) Scores is provided. The method includes receiving an input data comprising a textual information, and one or more tables pertaining to each of a plurality of information resources. the method further includes generating one or more anchor plots from the one or more tables, via a Large Language Model (LLM), using a predefined plot prompt, for each of the plurality of information resources. The method further includes generating a plurality of infographic images associated with the plurality of information resources, using the textual information and the one or more anchor plots, wherein each of the plurality of infographic images is associated with a plurality of attributes comprising a text alignment attribute, a data adherence attribute, an aesthetics attribute, and an infographic image quality attribute. Further the method includes computing a plurality of attribute scores of the plurality of attributes for each of the plurality of infographic images, using the textual information, and the one or more anchor plots. The method further includes calculating a plurality of Aesthetics Adherence to Data and Text (AADaT) scores for the plurality of infographic images, using the plurality of attribute scores of the plurality of infographic images. The method further includes generating a plurality of LLM scores along with a plurality of feedback instructions for the plurality of attributes, using the associated AADaT score for each the plurality of infographic images. The method further includes training an infographic evaluation model with the plurality of infographic images, the plurality of feedback instructions, the plurality of AADaT scores, and the plurality of LLM scores, to generate a trained infographic evaluation model.

In another aspect, a system for comprehensive assessment of infographic images using Aesthetics Adherence to Data and Text (AADaT) Scores is provided. The system includes a memory storing instructions; one or more communication interfaces; and one or more hardware processors coupled to the memory via the one or more communication interfaces , wherein the one or more hardware processors are reconfigured by the instructions to: receive an input data comprising a textual information, and one or more tables pertaining to each of a plurality of information resources; generate one or more anchor plots from the one or more tables, via a Large Language Model (LLM), using a predefined plot prompt, for each of the plurality of information resources; generate a plurality of infographic images associated with the plurality of information resources, using the textual information and the one or more anchor plots, wherein each of the plurality of infographic images is associated with a plurality of attributes comprising a text alignment attribute, a data adherence attribute, an aesthetics attribute, and an infographic image quality attribute; compute a plurality of attribute scores of the plurality of attributes for each of the plurality of infographic images, using the textual information, and the one or more anchor plots; calculate a plurality of Aesthetics Adherence to Data and Text (AADaT) scores for the plurality of infographic images, using the plurality of attribute scores of the plurality of infographic images; generate a plurality of LLM scores along with a plurality of feedback instructions for the plurality of attributes, using the associated AADaT score for each the plurality of infographic images; and train an infographic evaluation model with the plurality of infographic images, the plurality of feedback instructions, the plurality of AADaT scores, and the plurality of LLM scores, to generate a trained infographic evaluation model.

In yet another aspect, there are provided one or more non-transitory machine-readable information storage mediums comprising one or more instructions which when executed by one or more hardware processors cause a method for comprehensive assessment of infographic images using Aesthetics Adherence to Data and Text (AADaT) Scores. The method includes receiving an input data comprising a textual information, and one or more tables pertaining to each of a plurality of information resources. the method further includes generating one or more anchor plots from the one or more tables, via a Large Language Model (LLM), using a predefined plot prompt, for each of the plurality of information resources. The method further includes generating a plurality of infographic images associated with the plurality of information resources, using the textual information and the one or more anchor plots, wherein each of the plurality of infographic images is associated with a plurality of attributes comprising a text alignment attribute, a data adherence attribute, an aesthetics attribute, and an infographic image quality attribute. Further the method includes computing a plurality of attribute scores of the plurality of attributes for each of the plurality of infographic images, using the textual information, and the one or more anchor plots. The method further includes calculating a plurality of Aesthetics Adherence to Data and Text (AADaT) scores for the plurality of infographic images, using the plurality of attribute scores of the plurality of infographic images. The method further includes generating a plurality of LLM scores along with a plurality of feedback instructions for the plurality of attributes, using the associated AADaT score for each the plurality of infographic images. The method further includes training an infographic evaluation model with the plurality of infographic images, the plurality of feedback instructions, the plurality of AADaT scores, and the plurality of LLM scores, to generate a trained infographic evaluation model.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for comprehensive assessment of infographic images using Aesthetics Adherence to Data and Text (AADaT) Scores, according to some embodiments of the present disclosure.
FIG. 2 is a functional architecture depicting process flow of the system of FIG. 1 for the assessment of the infographic images using the AADaT Scores, according to some embodiments of the present disclosure.
FIGS. 3A, and 3B depict a flow diagram of a method for the assessment of the infographic images using the AADaT Scores, according to some embodiments of the present disclosure.
FIG. 4 depicts a block diagram for generating a plurality of infographic images, according to some embodiments of the present disclosure.
FIG. 5 depicts a block diagram for predicting a plurality of feedback instructions, and the AADaT score for a new infographic image during an inference stage, according to some embodiments of the present disclosure.
FIGS. 6A, 6B, 6C, and 6D depict the plurality of infographic images generated using textual information and one or more anchor plots, according to some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventional techniques for evaluating generated images, such as Contrastive Language-Image Pretraining (CLIP) Score, and Frechet Inception Distance (FID), prioritize aspects like text alignment, image aesthetics, and overall quality, but often do not comprehensively assess adherence to underlying input data. alongside these criteria.

Embodiments herein provide a method and system for comprehensive assessment of infographic images using Aesthetics Adherence to Data and Text (AADaT) Scores. The method leverages a novel evaluation metric termed the AADaT score. The AADaT score aims to provide a robust evaluation framework that considers how well an infographic image aligns with textual content, adheres to underlying data accuracy, exhibits aesthetics appeal, and maintains high-quality. This holistic approach ensures that the evaluation metric addresses multifaceted requirements of assessing the infographic image, thereby advancing state-of-the-art in automated evaluation methodologies for visual content in the context of Natural Language Processing (NLP) and infographic image generation.

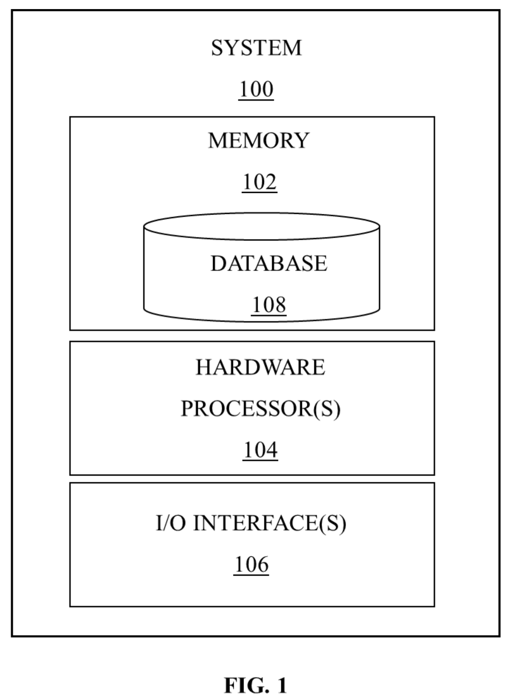

Referring now to the drawings, and more particularly to FIG. 1 through FIG. 6D, where similar reference characters denote corresponding features consistently throughout the figures, there are shown preferred embodiments, and these embodiments are described in the context of the following exemplary system and/or method.

FIG. 1 is a functional block diagram of a system 100 for the comprehensive assessment of the infographic images using the AADaT Scores, according to some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a textual information, one or more tables, a plurality of information resources, one or more anchor plots, a predefined plot prompt, a plurality of infographic images, a plurality of attributes, a plurality of attribute scores, the plurality of AADaT scores, wherein the database 108 further comprises information on a plurality of Large Language Model (LLM) scores, a plurality of feedback instructions, and the like. The memory 102 further comprises a plurality of modules (not shown for various technique(s)) such as, a LLM, an infographic evaluation model, a trained infographic evaluation model, a normalized CLIP Score model, a Structural Similarity Index (SSIM), Q-Align model, a leArning distoRtion maNifold for Image Quality Assessment (ARNIQA) technique and thereof. The above-mentioned technique(s) are implemented as at least one of a logically self-contained part of a software program, a self-contained hardware component, and/or a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

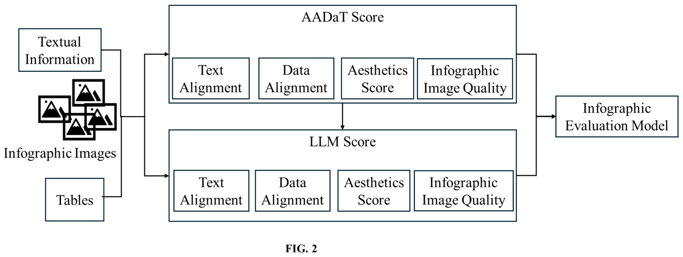

FIG. 2 is a functional architecture depicting process flow of the system 100 of FIG. 1 for the comprehensive assessment of the infographic images using the AADaT scores, according to some embodiments of the present disclosure. The system 100 receives an input data comprising the textual information, the one or more tables, and the plurality of infographic images pertaining to each of the plurality of information resources as depicted in FIG. 2. The plurality of attribute scores of the plurality of attributes are computed for each of the plurality of infographic images, using the textual information, and the one or more anchor plots of the one or more tables. The plurality of AADaT scores for the plurality of infographic images is computed, using the plurality of attribute scores of the plurality of infographic images, via an AADaT Score component as depicted in FIG. 2. Further the plurality of LLM scores along with the plurality of feedback instructions for each of the plurality of attributes are computed, using the plurality of AADaT scores for the plurality of infographic images via an LLM Score component as depicted in FIG. 2. The infographic evaluation model is trained with the plurality of infographic images, the plurality of feedback instructions, the plurality of AADaT scores, and the plurality of LLM scores, to generate the trained infographic evaluation model, via the Infographic Evaluation Model component as depicted in FIG. 2. The trained infographic evaluation model during an inferencing stage predicts the plurality of feedback instructions, and the AADaT score, upon receiving a new infographic image.

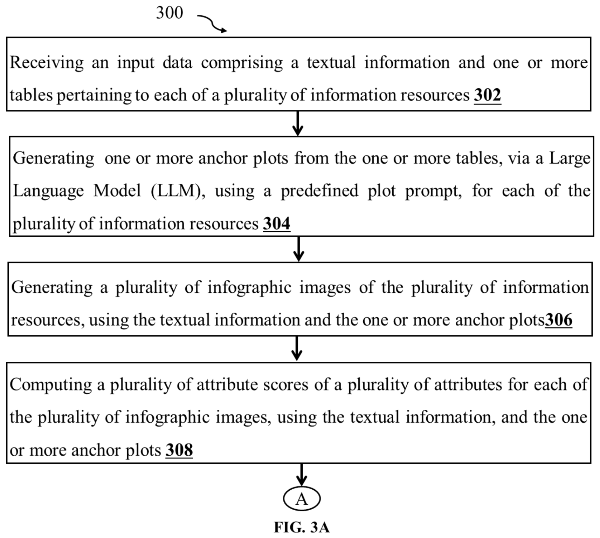

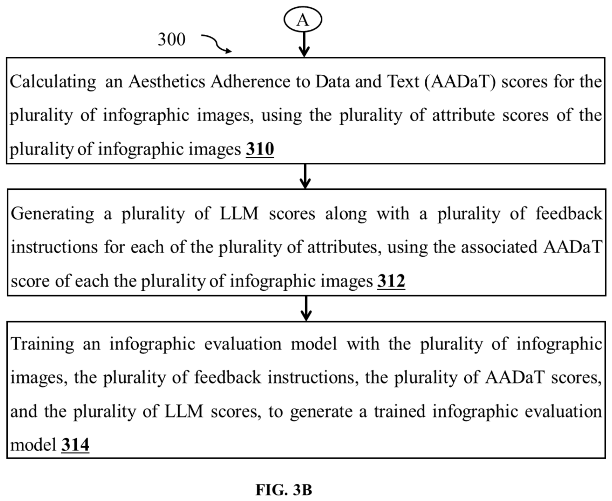

FIGS. 3A, and 3B depict a flow diagram of a method 300 for the assessment of the infographic images using the AADAT scores, using the system 100 of FIG. 1, according to some embodiments of the present disclosure.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the architecture diagram depicted in FIG. 2, and the steps of flow diagram as depicted in FIGS. 3A, and 3B. Although process steps, method steps, techniques or the like may be described in a sequential order, such processes, methods and techniques may be configured to work in alternate orders. In other words, any sequence or order of steps that may be described does not necessarily indicate a requirement that the steps to be performed in that order. The steps of processes described herein may be performed in any order practically. Further, some steps may be performed simultaneously.

Referring to steps of FIG. 3A, at step 302 of the method 300, the one or more hardware processors 104 are configured to receive the input data comprising the textual information, and the one or more tables pertaining to each of the plurality of information resources. The plurality of information resources comprises blogs, reference works, ebooks, journals, articles, and thereof. Basically, an information resource is a content which is used as a reference to generate an appropriate infographic image.

Formally an information resource *B,* has two components comprising the textual information *T,* and the one or more tables *D.*

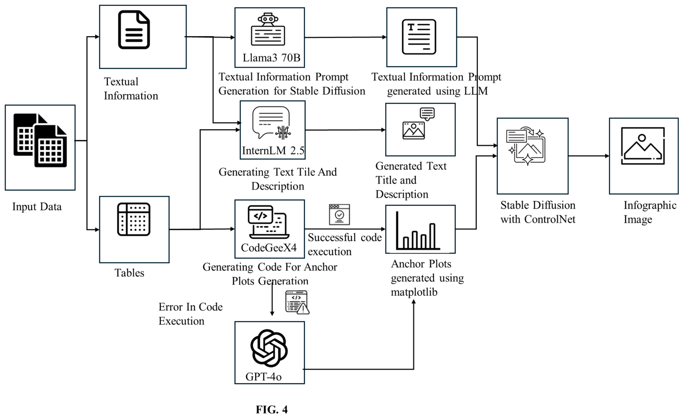

At step 304 of the method 300, the one or more hardware processors 104 are configured to generate the one or more anchor plots from the one or more tables, via the LLM, using a predefined plot prompt, for each of the plurality of information resources. A Stable Diffusion model faces challenges in interpreting the one or more tables to generate the infographics images autonomously. Hence, converting the one or more tables into one or more anchor plots is a practical approach. An anchor plot is a simple graph created using any plotting tool that accurately represents data in a table. To transform a table into an anchor plot, initially a code is generated to plot the graph and then this code is executed to produce a respective graph. The method of present disclosure leverages CodeGeeX4 for generating the code for the anchor plot generation as depicted in FIG. 4 according to some embodiments of present disclosure. From the generated code the one or more anchor plots are generated using matplotlib, according to some embodiments of present disclosure.

Since the one or more tables are scraped from web, they are neither cleaned nor pre-processed. As a result, the generated code occasionally contains errors, primarily due to the model's inability to clean the data properly. Given the diverse domains of the input data, including finance, environment, and politics-the one or more tables contain not only numeric values but also text. For instance, financial data often uses terms like "million" or "M" and "billion" or "B". In the environmental domain, green energy blogs may include data in Watts with terms like "MW" or "GW". For these specific cases, a larger language model (GPT-4o) is used to generate the code, which allows to reduce costs while enhancing the efficacy of generating the infographic image.

An exemplary predefined plot prompt to the LLM is as follows: """You are given a table in the format of a 2D list with some data in it. The value are in string format so while writing in the code make sure you add them as numbers for example value like '50%' should be written just 50 in the code so that there will be fair numerical comparison. You need to plot only ONE COLUMN of the table in the graph which you think is most suitable and important for example if there is some column which represent the share out of total then try to plot pie chart of it. Your task is to first figure out the most appropriate type of plot or graph needed to represent the data it could be anything like a bar graph or a pie chart or a scatter plot, box plot etc. Next you need to write a python code to generate that type of graph or plot. Make double sure that THE RESPONSE SHOULD ONLY CONTAIN THE CODE AND NO OTHER LINES OF TEXT. Make double sure to DON'T ADD LEGENDS, AXES AND LABELS TO THE GRAPH, If you are using matplotlib for bar graph then you can do this using plt.grid(False) and plt.axis('off), If there is pie chart then you can do this by not passing the labels and autopct in the plt.pie function. Make sure to import the necessary libraries and at the end save the image as {img_name}.png """.

The steps for generation of the one or more anchor plots for the one or more tables, comprise:
(a) Processing the one or more tables via a code generation model, to generate a code.
(b) Generating the one or more anchor plots for the generated code, using a plotting library. The code is corrected based on one or more errors identified therein, and the one or more anchor plots are regenerated. The generated code is the python code according to some embodiments of the present disclosure. If any errors encountered in the generated python code the LLM is used to correct the python code, and the anchor plot is regenerated, according to some embodiments of the present disclosure.

Upon generating the one or more anchor plots, at step 306 of the method 300, the one or more hardware processors 104 are configured to generate the plurality of infographic images associated with the plurality of information resources, using the textual information and the one or more anchor plots. FIG. 4 depicts a block diagram for generating the plurality of infographic images, according to some embodiments of the present disclosure. Each of the plurality of infographic images is associated with the plurality of attributes comprising a text alignment attribute, a data adherence attribute, an aesthetics attribute, and an infographic image quality attribute. A pipeline *f* to generate the infographic image *I* where *I = f*(*T*, *D*) such that ${max}_{I} \left({S}_{T}\left(I, T\right)\right) ∧ {max \left({S}_{D}\left(I, D\right)\right)}_{I} ∧ {max \left({S}_{A}\left(I\right)\right)}_{I} ∧ {max}_{I} \left({S}_{IQ}\left(I\right)\right)$ where T stands for text alignment;
*D* stands for data adherence;
*A* is for Aesthetics;
I stands for infographic image quality;
*max*(*S_{T} (I, T*)) corresponds to a maximum text alignment score of the infographic image I;
*max*(*S_{D}* (*I, D*)) corresponds to a maximum data adherence score of the infographic image I;
*max*(*S_{A}*(*I*)) corresponds to a maximum aesthetics score of the infographic image I; and
*max*(*S_{IQ}*(*I*)) corresponds to a maximum infographic image quality score of the infographic image *I.*

In majority of the information resources such as blogs and articles the plurality of infographic images are accompanied by a suitable text title and a description. The description should be such that it provides much more information and clarity about the infographic image. The description should contain some insight into the textual information and the one or more tables which are being portrayed through the infographic image. The disclosed method generates this type of description usings InternLM 2.5. Given its strong performance across multiple benchmarks on reasoning-based tasks, the InternLM 2.5 is a suitable choice for the method of present disclosure. The one or more tables, the textual information along with a predefined description prompt is passed to the LLM model to generate the text title and the description.

An exemplary predefined description prompt to the LLM is as follows: """You are an excellent data scientist who has been given a table in the format of a 2D list with some data in it. The values are in string format so while writing in the code make sure you add them as numbers. For example, a value like '50%' should be written as just 50 in the code so that there will be fair numerical comparison. You are also given a column name, now I have the plot for that column name. Your task is to generate a good 4-5 words title for the graph. It should align with the data for example it can be 'increasing prices of oil' or 'Increasing pollution due to plastic' etc. Now you need to give a description for the image of the plot which I will use in the blog. For more reference I am giving you the blog also which I have written. The description will be such that it should give the insights from the table about the column name and should be a good 2-3 lines long. For example, if the column name is 'oil prices' and the trend that is seen in the table is increasing till 2010 and highest in 2020, then the description can be 'The prices of oil have been increasing since 2010 and have reached the highest in 2020'. For this task you can follow the following steps: 1. First take out the data for that column and try to find out what the data is all about. 2. Then try to find out the statistics of the data like its mean,median, mode, maximum, minimum etc. whatever you think is necessary. 3. Then try to find out the trend in the input data like is it increasing, decreasing or constant. 4. Then try to find out the insights from the input data and textual information like what can be the reason for the trend, what can be the future trend etc. 5. Then try to write a good title and description for the image of the plot. The table is as follows: {table}. The column name for which you have to generate the title and description is: {column}. The blog content is as follows: {blog}. Response should be like this no extra spaces or lines in between the response. Just the title and description in the following format: ‴Title‴ ‴Description ‴""".

The textual information is fed to the LLM to generate a textual information prompt. The LLM used for generating the textual information prompt is Llama3 70B according to some embodiments of the present disclosure.

The textual information prompt, the one or more anchor plots, and generated the text title and the description are integrated with a predefined design prompt, to generate an integrated prompt. An exemplary predefined design prompt is as follows: """have a blog for which I need to generate an aesthetics infographics which will draw user's attention and increase the viewership. For that I have generated a simple bar graph for my data using matplotlib and now I want to use stable diffusion to beautify my graph and your task is to provide me a prompt less than 77 tokens which I will give to the stable diffusion to implant the bars of the bar graph. The steps to generate a good prompt are listed below: 1. First according to the text given below find out the most appropriate item that can be incorporated in the bars of the bar graph. The item that needs to be selected must align with the theme of the text and also should fit in the bars of the bar graph. Try to avoid any object whose width is much larger than height and depth. The selected item will be added in the bars of the bargraph. 2. After selecting the item give propers description about how the item will be used as bars of the graph like standing upright front view or stacked on each other etc., its look, color, whether it is shiny or dull, of which material it is built any other description like something flowing out of it, something put inside or outside it. If you are unable to give proper description, try to think of some other related item for which you can think of the description. 3.Give description about the background in which the items you mentioned above should be kept, give proper response including how the object will interact with the background for example will it be over the surface, of on the ground, or submerged under the water, or floating on water etc. The theme of the background you give must aligns to the text given below. 4.Give the lighting conditions whether it is well lit or dim or sunny or night. Whether there are some reflections or not etc. 5. Next add the word ultra-realistic, 8k, digital art, focus, sharp at the end. 6. Summarize everything that you get till now so that the final prompt is around 77 tokens. THE OUTPUT SHOULD BE JUST THE PROMPT IN A SINGLE LINE NO OTHER SPACE OR LINE.""".

The exemplary integrated prompt is as follows: """I have a blog for which i need to generate an aesthetics infographics which will draw user's attention and increase the viewership. For that i have generated a simple bar graph for my data using matplotlib and now i want to use stable diffusion to beautify my graph and your task is to provide me a prompt less than 77 tokens which i will give to the stable diffusion to implant the bars of the bar graph. The steps to generate a good prompt are listed below: 1. First according to the text given below find out the most appropriate item that can be incorporated in the bars of the bar graph. The item that needs to be selected must align with the theme of the text and also should fit in the bars of the bar graph. Try to avoid any object whose width is much larger than height and depth. The selected item will be added in the bars of the bargraph. 2. After selecting the item give propers description about how the item will be used as bars of the graph like standing upright front view or stacked on each other etc., its look, color, whether it is shiny or dull, of which material it is built any other description like something flowing out of it, something put inside or outside it. If you are unable to give proper description try to think on some other related item for which you can think of the description. 3.Give description about the background in which the items you mentioned above should be kept, give proper response including how the object will interact with the background for example will it be over the surface, of on the ground, or submerged under the water, or floating on water etc. The theme of the background you give must aligns to the text given below. 4.Give the lighting conditions whether it is well lit or dim or sunny or night. Whether there are some reflection or not etc. 5. Next add the word ultra-realistic, 8k, digital art, focus, sharp at the end. 6. Summarize everything that you get till now so that the final prompt is around 77 tokens. THE OUTPUT SHOULD BE JUST THE PROMPT IN A SINGLE LINE NO OTHER SPACE OR LINE. Text: {blog_content} Description: {title} Table Summary: {description}""".

The LLM is instructed using the integrated prompt to create an infographic image prompt and generate the infographic image, using the infographic image prompt and the one or more anchor plots.

Recent advancements in image generation have evolved from Generative Adversarial Networks (GANs) to sophisticated diffusion models like Stable Diffusion. Among these, Stable Diffusion 3 is notable for its innovative approach. Despite its powerful capabilities, the Stable Diffusion 3 can be enhanced with ControlNet, which acts as a structural adapter for the diffusion model. The ControlNet utilizes a Canny edge detection algorithm on the Anchor plot to create an edge map, serving as a blueprint for the infographic image. This map, combined with the textual information prompt along with the generated text title and the description, guides the infographic image generation to ensure the output aligns with the intended layout and the textual information. The ControlNet integration with the Stable Diffusion 3 creates a robust framework for producing high-quality, structurally accurate, and contextually relevant infographic images. This synergy exemplifies the potential of combining advanced text encoding, multi-modal fusion, and structural guidance, pushing the boundaries of the infographic image generation capabilities. The multi-modal fusion is associated with a text modality, vision modality, and a numerical tabular data modality. The text modality comprises the description along with structural design instructions of the predefined design prompt. The vision modality corresponds to the plurality of anchor plots. The numerical tabular data modality corresponds to the one or more tables. This represents multimodal fusion. Advanced text encoding corresponds to using advanced LLMs.

At step 308 of the method 300, the one or more hardware processors 104 are configured to compute the plurality of attribute scores of the plurality of attributes for each of the plurality of infographic images, using the textual information, and the one or more anchor plots. The plurality of attribute scores comprises a text alignment attribute score, a data adherence attribute score, an aesthetics attribute score, and an infographic image quality attribute score. Here the text alignment attribute score also referred to as the maximum text alignment score (*S_{T}*), the data adherence attribute score also referred to as the maximum data adherence score (*S_{D}*), the aesthetics attribute score also referred to as the maximum aesthetics score (*S_{A}*), and the infographic image quality attribute score also referred to as the maximum infographic image quality score *S_{IQ}*, according to some embodiments of the present disclosure. From an implementation perspective, the text alignment attribute score *S_{T}* is measured using the normalized CLIP Score. This involves calculating the CLIP score between the textual information and the generated infographic image. The data alignment attribute score is measured using the SSIM. To enhance accuracy of the SSIM, the background from the generated infographic image is removed and Canny edge detection technique is used to convert both the generated infographic image and the anchor plot into edge maps, according to some embodiments of the present disclosure. The aesthetics attribute score is measured using Q-Align, a recent advancement in aesthetics scoring that outperforms the previously best-performing metric, LAION-Aesthetics- Predictor V2 1. The infographic image quality attribute score is measured using the ARNIQA, a model trained to detect distortions in the the plurality of infographic images and provide the infographic image quality attribute score.

The steps for calculating the plurality of attribute scores for each of the plurality of infographic images comprise/include:
(a) Computing the text alignment attribute score via the normalized CLIP Score model, using the textual information and the infographic image.
(b) Computing the data adherence attribute score via the SSIM, using the infographic image and the one or more anchor plots by:
   (i) Removing background of the infographic image, to generate a clean infographic image.
   (ii) Generating a clean infographic image edge map, one or more anchor plot edge maps by applying a canny edge detection technique on the clean infographic image, and the one or more of anchor plots.
   (iii) Computing the data adherence attribute score by comparing the clean infographic image edge map across the one or more anchor plot edge maps, via the SSIM.
(c) Computing the aesthetics attribute score via the Q-Align model, using the infographic image.
(d) Computing the infographic image quality attribute score via the ARNIQA technique, using the infographic image.

At step 310 of the method 300, the one or more hardware processors 104 are configured to calculate the plurality of AADaT scores for the plurality of infographic images, using the plurality of attribute scores of the plurality of infographic images. There are multiple metrics for evaluating the generated infographic images like SSIM, Inception Score (IS), Frechet Inception distance (FID), Aesthetics Score, the CLIP Score, and thereof. But none of these can accurately measure the text alignment attribute score, the data adherence attribute score, the aesthetics attribute score, and the infographic image quality attribute score together. The generated infographic image should have the maximum text alignment score (*S_{T}*), the maximum data adherence score (*S_{D}*), the maximum aesthetics score (*S_{A}*), and maximum infographic image quality score (*S_{IQ}*).

For comprehensive assessment of the infographic images the method of present disclosure integrates the plurality of attribute scores to generate an evaluation metric referred to as the AADaT score depicted as follows: $η = {χS}_{IQ} {S}_{D} \sqrt{1 - \left|χ-{S}_{D}\right|}$

where $χ = \sqrt{{S}_{A} {S}_{T}}$

The plurality of attribute scores is normalized to the range of [0, 1] before being used in equation (2). The equation (2) perfectly describes a direct dependence of the evaluation metric on the text alignment attribute score, the data adherence attribute score, the aesthetics attribute score, and the infographic image quality attribute score together. The term $\sqrt{1 - \left|χ-{S}_{D}\right|}$ serves as a penalty when the generated infographic image is biased towards either the text alignment attribute score or data adherence attribute. When the infographic image is highly biased towards the text alignment then the value of χ will be much higher than the value of *S_{D}* and hence the value of $\sqrt{1 - \left|χ-{S}_{D}\right|}$ is very low, penalizing the infographic image for being biased. Similarly, if the value of *S_{D}* is much higher than the value of χ then also the value of $\sqrt{1 - \left|χ-{S}_{D}\right|}$ is very low, penalizing the infographic image for being biased. On the other hand, if the values of χ and *S_{D}* is close to each other denoting the fact that the infographic image has no bias for any of the text alignment score or data adherent score and thus penalty term would be near to 1.

The rationale behind choosing $χ = \sqrt{{S}_{A} {S}_{T}}$ stems from the interdependence observed between the aesthetics attribute score *S_{A}* and the text alignment score *S_{T}.* These scores exhibit a weak correlation, if the text alignment is more prioritized over the data adherence of the infographic image model prioritizes, the resulting image may deviate from the intended anchor plot, potentially achieving high aesthetics but lacking fidelity to the input data. Conversely, if the text alignment is poor, the generated image tends to have limited creativity and often receives a lower aesthetics attribute score. Thus, $χ = \sqrt{{S}_{A} {S}_{T}}$ serves to balance these factors, providing a unified metric that considers both the aesthetics, and an image quality to the text alignment and the data adherence of the infographic image. Thus, there is a direct relationship between *S_{A}* and *S_{T},* they increase together and decreased together.

At step 312 of the method 300, the one or more hardware processors 104 are configured to generate the plurality of LLM scores along with the plurality of feedback instructions for the plurality of attributes, using the associated AADaT score for each the plurality of infographic images. The plurality of LLM scores comprises a LLM text alignment score, a LLM data adherence score, a LLM aesthetics score, and a LLM image quality score. The plurality of feedback instructions comprises a plurality of text alignment feedback instructions, a plurality of data adherence feedback instructions, a plurality of aesthetics feedback instructions, and a plurality of image quality feedback instructions.

The LLM text alignment score along with the plurality of text alignment feedback instructions are generated by feeding a predefined text alignment evaluation prompt, the infographic image, the text alignment attribute score, the AADaT score, and the textual information, to the LLM. The text alignment evaluation prompt comprises a plurality of text alignment evaluation parameters, an expected score range of the LLM text alignment score, and the plurality of text alignment feedback instructions for detailed feedback to improve the generated infographic image. An exemplary predefined text alignment evaluation prompt is as follows: """You are an expert in evaluating images based on given assessment parameter for evaluating the adherence of the given image to the reference text. You will be provided with an image and the textual content. You should only consider the information provided in the assessment parameter parameters. The parameter parameters and questions are given below: 1. The generated image should be appropriate and relevant to the reference textual content. Factors such as context, symbolic meaning, keywords, similarity, facts, and appropriateness of the visual representation are the factors to be considered while evaluating text adherence. 2. Is the generated image well-aligned with the textual content? 3. Does the score *S_{T}* appropriately rates the alignment of the image and textual content? Consider the score to be between 0 to 1 with 0 as no alignment and 1 to be of high alignment. 4. Explain your evaluation in detail. 5. Provide detailed instruction to improve the alignment between image and text. Image: {image} Reference text: {textual_content} Reference text alignment attribute score {*S_{T}*}"""*.*

The LLM data adherence score along with the plurality of data adherence feedback instructions are generated by feeding a predefined data adherence evaluation prompt, the infographic image, the AADaT score, the data adherence attribute score, and the one or more anchor plots, to the LLM. The data adherence evaluation prompt comprises the plurality of data adherence evaluation parameters, the expected score range of the LLM data adherence score, and the plurality of data adherence feedback instructions for detailed feedback to improve the generated infographic image. An exemplary predefined data adherence evaluation prompt is as follows: """You are an expert in evaluating images based on given assessment parameter for evaluating the adherence of the given image to the reference tabular data. You will be provided with an image, and the tabular content. You should only consider the information provided in the assessment parameter parameters. The parameter parameters and questions are given below: 1. This evaluation check how well the image adheres to the input data. Factors such as numerical accuracy, factual correctness, and appropriateness of the visual representation with respect to the tabular data are to be considered while evaluating data alignment. 2. Is the generated image well-aligned with the tabular data? 3. Does the score *S_{D}* appropriately rates the alignment of the image and tabular content? Consider the score to be between 0 to 1 with 0 as no alignment and 1 to be of high alignment. 4. Explain your evaluation in detail. 5. Provide detailed instruction to improve the alignment between image and tabular data. Image: {image} Tabular data: {table} Reference data adherence attribute score: {*S_{D}*}""".

The LLM aesthetics score along with the plurality of aesthetics feedback instructions are generated by feeding a predefined aesthetics evaluation prompt, the infographic image, the AADaT score, the aesthetics attribute score, to the LLM. The predefined aesthetics evaluation prompt comprises a plurality of aesthetics evaluation parameters, the expected score range of the LLM aesthetics score, and the plurality of aesthetics feedback instructions for detailed feedback to improve the generated infographic image. An exemplary predefined aesthetics evaluation prompt is as follows: """You are an expert in evaluating images based on given assessment parameter for evaluating overall aesthetics of the image. You will be provided with an image to assess. You should only consider the information provided in the assessment parameter parameters. The parameter parameters and questions are given below: 1. Aesthetics images are images that are visually pleasing. These images are composed utilizing factors such as balance, color, movement, pattern, scale, shape and visual weight. These factors are to be considered while evaluating an image for aesthetics. 2. Is the generated image aesthetically appropriate and relevant? 3. Does the score *S_{A}* appropriately rates the aesthetics quality of the image? Consider the score to be between 0 to 1 with 0 as no alignment and 1 to be of high alignment. 4. Explain your evaluation in detail. 5. Provide detailed instruction to improve the aesthetics quality of the image. Image: {image} a reference aesthetics attribute score: { *S_{A}*}""".

The LLM image quality score along with the plurality of image quality feedback instructions are generated by feeding a predefined image quality evaluation prompt, the infographic image, the AADaT score, the infographic image quality attribute score, to the LLM. The expected score range of the LLM image quality score, and the plurality of image quality feedback instructions for detailed feedback to improve the generated infographic image. An exemplary predefined image quality evaluation prompt is as follows: """You are an expert in evaluating images based on given assessment parameter for evaluating overall quality of the image. You will be provided with an image to assess along with a reference score computed using automated metric. You should only consider the information provided in the assessment parameter parameters. The parameter parameters and questions are given below: 1. Image quality can be qualitatively described in terms of characteristics such as detail, contrast, noise, and distortion. The combination of these characteristics defines the quality of an image. Following are few attributes to consider while evaluating image quality, Sharpness, Noise, Contrast, Distortion, and Artefacts. 2. Is the quality of the generated image good? 3. Does the score S_IQ appropriately rates the quality of the image? Consider the score to be between 0 to 1 with 0 as no alignment and 1 to be of high alignment. 4. Explain your evaluation in detail. 5. Provide detailed instruction to improve the image quality. Image: {image} reference infographic image quality score: {*S_{IQ}*}""".

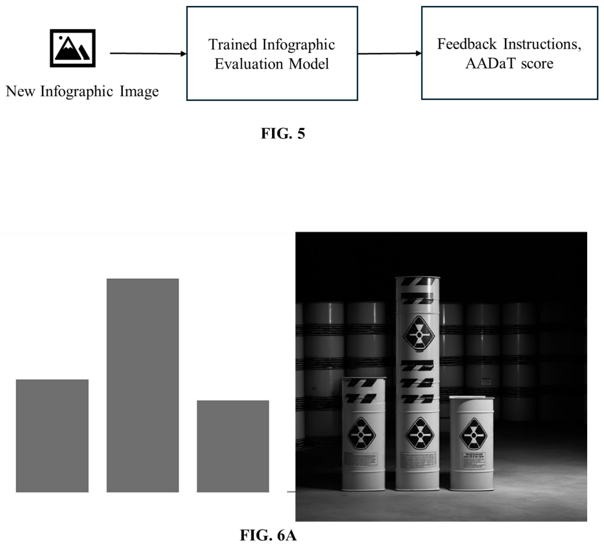

At step 314 of the method 300, the one or more hardware processors 104 are configured to train the infographic evaluation model with the plurality of infographic images, the plurality of feedback instructions, the plurality of AADaT scores, and the plurality of LLM scores, to generate the trained infographic evaluation model. The trained infographic evaluation model during an inferencing stage predicts the plurality of feedback instructions, and the AADaT score, upon receiving the new infographic image. FIG. 5 depicts a block diagram for predicting a plurality of feedback instructions, and the AADaT score for the new infographic image during an inference stage, according to some embodiments of the present disclosure. The AADaT score is used to assess comprehensive assessment of comprising a text alignment, a data adherence, an aesthetics, and an image quality of the new infographic image, and wherein the plurality of feedback instructions are used to further improve the new infographic image.

### Experimental Results

The method of present disclosure compiled a dataset (http://www.visualcapitalist.com) that includes both the textual information of blogs and the associated one or more tables. Additionally, the dataset features images used by the authors in their blogs. One notable source of such blogs across various domains such as Finance, Market, Health, and Environment was Visual Capitalist. The data from the Visual Capitalist website is scrapped, covering seven categories: Market, Money, Technology, Energy, Healthcare, Environment, and Politics. The dataset comprises five columns: publish date of the blog, title, blog content, tabular content, and related images. The tabular content is formatted as a flattened table, for facilitating its use in analysis.

For experimental analysis the method of present disclosure experiments used an Nvidia A5000 Graphics Processing Unit (GPU). For larger LLMs in the pipeline like Large Language Model Meta AI3-70B (LLaMA3-70B), the Groq API 3 is utilized, as it offers significantly reduced inference times compared to local execution. A subset of infographics images is generated and conducted human annotation to determine the best of the three infographics images produced by the method of the present disclosure. This human-annotated data helped to evaluate whether the disclosed evaluation metric aligns with human perception. The infographic images are generated from various baselines and state of- the-art models like Stable Diffusion XL (SDXL), DALL-E, and stable diffusion 3 (SD-3) Large using the same subset of data instances. The best infographic image was selected from the three infographic images generated by the method of present disclosure for comparison against the state of- the-art models. The evaluation metric (AADaT) of the method of the proposed disclosure is reassessed using the human evaluation data.

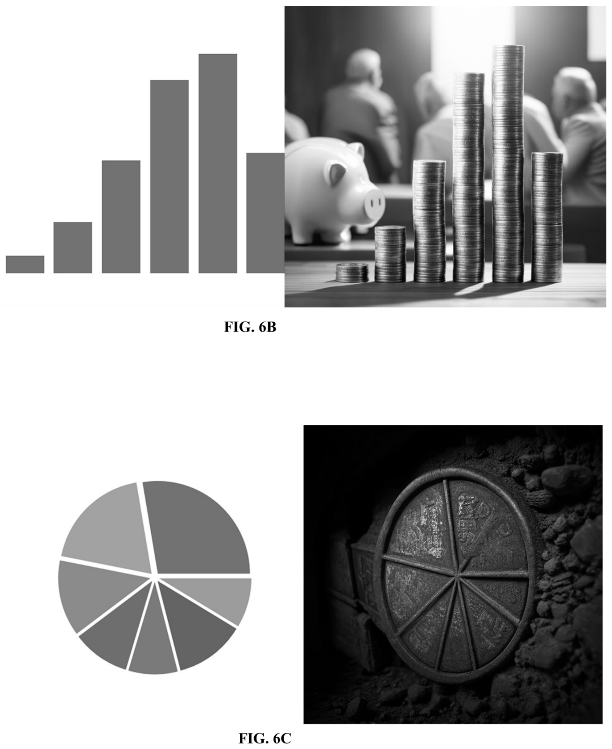

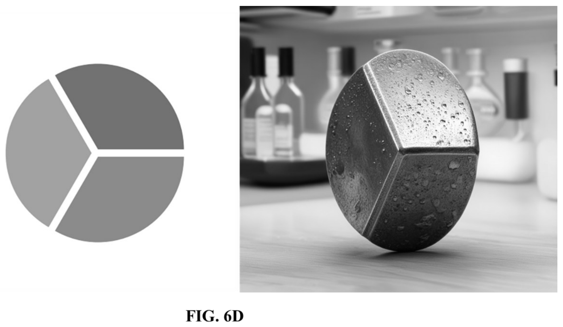

FIGS. 6A, 6B, 6C, and 6D depict generated the plurality of infographic images, using textual information and one or more anchor plots, according to some embodiments of the present disclosure. Specifically, FIG. 6A illustrates the infographic image generated for Nuclear Energy. Specifically, FIG. 6B illustrates the infographic image generated for benefits of tax planning. Specifically, FIG. 6C illustrates the infographic image generated for the auction of old coins. Specifically, FIG. 6D illustrates the infographic image generated for uranium power generation.

Table. 1 presents the average values of the text alignment attribute score, the data adherence attribute score, the aesthetics attribute score, the infographic image quality attribute score, and the evaluation metric AADaT of the method of the disclosure.

**Table. 1**

| **Metric** | **SDXL** | **DALL-E** | **SD3-Large** | **Infographic Evaluation Model** |
|---|---|---|---|---|
| **Text Alignment Attribute Score** | **0.873** | **0.873** | **0.873** | **0.873** |
| **Data Adherence Attribute Score** | **0.917** | 0.616 | 0.9 | 0.897 |
| **Aesthetics Attribute Score** | 0.502 | **0.918** | 0.622 | 0.779 |
| **Infographic Image Quality Attribute Score** | 0.421 | **0.66** | 0.438 | 0.611 |
| **AADaT Score** | 0.31 | 0.386 | 0.324 | **0.456** |

Additionally, Table. 1 compares the method of the infographic evaluation model performance with baselines like Stable Diffusion XL (SDXL) and current state-of-the-art models such as DALL-E and Stable Diffusion 3 Large. As evident from the Table. 1. The method of present disclosure consistently outperforms both the baselines and the state-of-the-art models with a significant margin.

To evaluate the disclosed evaluation metric (AADaT) alignment with human perception, a human evaluation was conducted on a subset of generated infographic images. Five human evaluators were given the original blog, its title, the anchor plot, and the generated infographic images, tasked with selecting the best infographic image. The plurality of attribute scores was calculated for these infographic images and checked how often the AADaT scores matched with the human selection. It was observed an 82% match between the human-chosen best infographic image and the highest-scored infographic image by the AADaT score our metric.

**Ablation Studies:** Considering the numerous components in method of present disclosure, it is crucial to conduct an ablation study to understand the significance of each component. Under the ablation study examination id performed for: 1) The trade-off between the proprietary GPT-4o and LLaMA-70B; 2) The necessity of using large LLMs, and whether a smaller 7B model can generate effective prompts; 3) The impact of using the ControlNet and how the results affected affected without it.

**Trade-off between GPT-4o and LLaMA-70B:** The samples from the dataset are selected and prompts are generated using both the GPT-4o and the LLaMA-70B. the one or more infographic images are generated for both sets of prompts using the same anchor plot to ensure that the only varying factor was the text alignment attribute score. After evaluation, the results are presented in Table. 2. The results shows that Llama3-70B has performed better than GPT-4o and the pricing of Llama3- 70B is significantly lesser than GPT-4o.

**Table. 2**

| **Model** | **AADaT** | **Cost/1M tokens** |
|---|---|---|
| **Llama3-70B** | **0.456** | $0.59/$0.79 |
| **GPT-4o** | 0.411 | $5.00/$15.00 |

**Necessity of using larger LLMs for prompt generation:** Experiments were conducted for generating prompts using the current state-of-the-art 7 billion parameter LLM InternLM- 2.5-7B and LLaMA3-70B. The results, as shown in Table. 3, demonstrate that the 7B model is not capable of producing high-quality prompts. This can be logically understood by considering that smaller language models have fewer parameters, which limits their ability to capture in depth knowledge compared to larger models. When creating prompts, the model needs to recognize the item and provide detailed descriptions, which requires extensive knowledge of various objects. Smaller LLMs are less likely to have comprehensive knowledge about multiple items, resulting in less informative prompts and ultimately impacting the quality of the generated infographic images.

**Table. 3**

| **Model** | **AADaT** | **SSIM** | **Q-Align** | **ARNIQA** |
|---|---|---|---|---|
| **InternLM-2.5** | 0.441 | **0.855** | 0.829 | 0.609 |
| **Llama3-70B** | **0.477** | 0.854 | **0.835** | **0.661** |

**Necessity of ControlNet:** The ControlNet adds additional conditions to the infographic image generation process in the form of an image. The edge map helps the infographic evaluation model generate the infographic images that stay aligned with the input data. Without ControlNet, the alignment between the generated infographic image and the input data is adversely affected. This impact is evident in the results shown in Table. 4.

**Table. 4**

| **Model** | **AADaT** | **Q-Align** | **ARNIQA** |
|---|---|---|---|
| **SD3 with ControlNet** | **0.477** | **0.835** | **0.661** |
| **SD3 without ControlNet** | 0.28 | 0.617 | 0.406 |

The method of present disclosure advances infographic image creation for blogs and articles, surpassing current state-of-the-art models. It integrates four key components: generating anchor plot generation, prompt generation using LLaMA3-70B, infographic image generation via Stable Diffusion 3 with ControlNet, and description generation. A dataset is curated combining blogs, titles, text, data, and images, filling a crucial gap in existing resources. The evaluation metric AADaT leveraged for assessment based on the text alignment attribute score, the data adherence attribute score, the aesthetics attribute score, and the infographic image quality attribute score. The experiments show superior performance against baseline and current state-of-the-art models like SDXL, DALL-E, and SD-3 Large. Through detailed ablation studies, the effectiveness of each pipeline component, highlighting the importance of large language models and ControlNet for image quality is validated. Human evaluation confirmed the AADaT score alignment with the human perception, emphasizing the disclosed method reliability in generating high-quality, contextually accurate infographic images.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of comprehensive assessment of infographic images using Aesthetics Adherence to Data and Text (AADaT) Scores. Conventional techniques for evaluating the plurality of infographic images, such the CLIP Score, and the Frechet Inception Distance, prioritize aspects like text alignment, image aesthetics, and overall quality, but often do not comprehensively assess adherence to underlying input data. alongside these criteria. The method of present disclosure leverages the evaluation metric termed the AADaT score that aims to provide a robust evaluation framework that considers how well an infographic image aligns with textual content, adheres to underlying data accuracy, exhibits aesthetics appeal, and maintains high-quality.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), the method comprising:
receiving (302), via one or more hardware processors, an input data comprising a textual information, and one or more tables pertaining to each of a plurality of information resources;
generating (304), via the one or more hardware processors, one or more anchor plots from the one or more tables, via a Large Language Model (LLM), using a predefined plot prompt, for each of the plurality of information resources;
generating (306), via the one or more hardware processors, a plurality of infographic images associated with the plurality of information resources, using the textual information and the one or more anchor plots, wherein each of the plurality of infographic images is associated with a plurality of attributes comprising a text alignment attribute, a data adherence attribute, an aesthetics attribute, and an infographic image quality attribute;
computing (308), via the one or more hardware processors, a plurality of attribute scores of the plurality of attributes for each of the plurality of infographic images, using the textual information, and the one or more anchor plots;
calculating (310), via the one or more hardware processors, a plurality of Aesthetics Adherence to Data and Text (AADaT) scores for the plurality of infographic images, using the plurality of attribute scores of the plurality of infographic images;
generating (312), via the one or more hardware processors, a plurality of LLM scores along with a plurality of feedback instructions for the plurality of attributes, using the associated AADaT score for each the plurality of infographic images; and
training (314), via the one or more hardware processors, an infographic evaluation model with the plurality of infographic images, the plurality of feedback instructions, the plurality of AADaT scores, and the plurality of LLM scores, to generate a trained infographic evaluation model.

2. The processor implemented method as claimed in claim 1, wherein the trained infographic evaluation model during an inferencing stage predicts the plurality of feedback instructions, and the AADaT score, upon receiving a new infographic image, wherein the AADaT score is used to assess comprehensive assessment comprising a text alignment, a data adherence, an aesthetics, and an image quality of the new infographic image, and wherein the plurality of feedback instructions are used to further improve the new infographic image.

3. The processor implemented method as claimed in claim 1, wherein the plurality of attribute scores comprises a text alignment attribute score, a data adherence attribute score, an aesthetics attribute score, and an infographic image quality attribute score, wherein the plurality of LLM scores comprises a LLM text alignment score, a LLM data adherence score, a LLM aesthetics score, and a LLM image quality score, and wherein the plurality of feedback instructions comprises a plurality of text alignment feedback instructions, a plurality of data adherence feedback instructions, a plurality of aesthetics feedback instructions, and a plurality of image quality feedback instructions.

4. The processor implemented method as claimed in claim 1, wherein generation of the one or more anchor plots for the one or more tables, comprises:
processing the one or more tables via a code generation model, to generate a code; and
generating the one or more anchor plots for the generated code, using a plotting library, wherein the code is corrected based on one or more errors identified therein, and the one or more anchor plots are regenerated.

5. The processor implemented method as claimed in claim 1, wherein the steps for generating an infographic image of the plurality of infographic images using the textual information and the one or more anchor plots comprises:
generating a text title and a description for the infographic image, by feeding the one or more tables and the textual information, along with a predefined description prompt to the LLM.
integrating the textual information, the one or more tables, and the text title and the description with a predefined design prompt, to generate an integrated prompt;
instructing the LLM using the integrated prompt to create an infographic image prompt; and
generating the infographic image, by instructing the LLM, using the infographic image prompt and the one or more anchor plots.

6. The processor implemented method as claimed in claim 1, wherein the steps for calculating the plurality of attribute scores for each of the plurality of infographic images comprises:
computing the text alignment attribute score via a normalized Contrastive Language-Image Pretraining (CLIP) Score model, using the textual information and the infographic image;
computing the data adherence attribute score via a Structural Similarity Index (SSIM), using the infographic image and the one or more anchor plots by:
removing background of the infographic image, to generate a clean infographic image;
generating a clean infographic image edge map, one or more anchor plot edge maps by applying a canny edge detection technique on the clean infographic image and the one or more of anchor plots; and
computing the data adherence attribute score by comparing the clean infographic image edge map across the one or more anchor plot edge maps, via the SSIM;
computing the aesthetics attribute score via a Q-Align model, using the infographic image; and
computing the infographic image quality attribute score via a leArning distoRtion maNifold for Image Quality Assessment (ARNIQA) technique, using the infographic image.

7. The processor implemented method as claimed in claim 1, wherein the steps for calculating the plurality of LLM scores along with the plurality of feedback instructions for each of the plurality of attributes comprises:
feeding a predefined text alignment evaluation prompt, the infographic image, the text alignment attribute score, the AADaT score, and the textual information, to the LLM, to generate the LLM text alignment score along with the plurality of text alignment feedback instructions, wherein the text alignment evaluation prompt comprises a plurality of text alignment evaluation parameters, an expected score range of the LLM text alignment score, and the plurality of text alignment feedback instructions for detailed feedback to improve the generated infographic image;
feeding a predefined data adherence evaluation prompt, the infographic image, the AADaT score, the data adherence attribute score, and the one or more anchor plots, to the LLM, to generate the LLM data adherence score along with the plurality of data adherence feedback instructions, wherein the data adherence evaluation prompt comprises the plurality of data adherence evaluation parameters, the expected score range of the LLM data adherence score, and the plurality of data adherence feedback instructions for detailed feedback to improve the generated infographic image;
feeding a predefined aesthetics evaluation prompt, the infographic image, the AADaT score, the aesthetics attribute score, to the LLM, to generate the LLM aesthetics score along with the plurality of aesthetics feedback instructions, wherein the predefined aesthetics evaluation prompt comprises a plurality of aesthetics evaluation parameters, the expected score range of the LLM aesthetics score, and the plurality of aesthetics feedback instructions for detailed feedback to improve the generated infographic image; and
feeding a predefined image quality evaluation prompt, the infographic image, the AADaT score, the infographic image quality attribute score, to the LLM, to generate the LLM image quality score along with the plurality of image quality feedback instructions, wherein the predefined image quality image quality prompt comprising a plurality of evaluation parameters, the expected score range of the LLM image quality score, and the plurality of image quality feedback instructions for detailed feedback to improve the generated infographic image.

8. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive an input data comprising a textual information, and one or more tables pertaining to each of a plurality of information resources;
generate one or more anchor plots from the one or more tables, via a Large Language Model (LLM), using a predefined plot prompt, for each of the plurality of information resources;
generate a plurality of infographic images associated with the plurality of information resources, using the textual information and the one or more anchor plots, wherein each of the plurality of infographic images is associated with a plurality of attributes comprising a text alignment attribute, a data adherence attribute, an aesthetics attribute, and an infographic image quality attribute;
compute a plurality of attribute scores of the plurality of attributes for each of the plurality of infographic images, using the textual information, and the one or more anchor plots;
calculate a plurality of Aesthetics Adherence to Data and Text (AADaT) scores for the plurality of infographic images, using the plurality of attribute scores of the plurality of infographic images;
generate a plurality of LLM scores along with a plurality of feedback instructions for the plurality of attributes, using the associated AADaT score for each the plurality of infographic images; and
train an infographic evaluation model with the plurality of infographic images, the plurality of feedback instructions, the plurality of AADaT scores, and the plurality of LLM scores, to generate a trained infographic evaluation model.

9. The system as claimed in claim 8, wherein the trained infographic evaluation model during an inferencing stage predicts the plurality of feedback instructions, and the AADaT score, upon receiving a new infographic image, wherein the AADaT score is used to assess comprehensive assessment comprising a text alignment, a data adherence, an aesthetics, and an image quality of the new infographic image, and wherein the plurality of feedback instructions are used to further improve the new infographic image.

10. The system as claimed in claim 8, wherein the plurality of attribute scores comprises a text alignment attribute score, a data adherence attribute score, an aesthetics attribute score, and an infographic image quality attribute score, wherein the plurality of LLM scores comprises a LLM text alignment score, a LLM data adherence score, a LLM aesthetics score, and a LLM image quality score, and wherein the plurality of feedback instructions comprises a plurality of text alignment feedback instructions, a plurality of data adherence feedback instructions, a plurality of aesthetics feedback instructions, and a plurality of image quality feedback instructions.

11. The system as claimed in claim 8, wherein generation of the one or more anchor plots for the one or more tables, comprises:
processing the one or more tables via a code generation model, to generate a code; and
generating the one or more anchor plots for the generated code, using a plotting library, wherein the code is corrected based on one or more errors identified therein, and the one or more anchor plots are regenerated.

12. The system as claimed in claim 8, wherein the steps for generating an infographic image of the plurality of infographic images using the textual information and the one or more anchor plots comprises:
generating a text title and a description for the infographic image, by feeding the one or more tables and the textual information, along with a predefined description prompt to the LLM.
integrating the textual information, the one or more tables, and the text title and the description with a predefined design prompt, to generate an integrated prompt;
instructing the LLM using the integrated prompt to create an infographic image prompt; and
generating the infographic image, by instructing the LLM, using the infographic image prompt and the one or more anchor plots.

13. The system as claimed in claim 8, wherein the steps for calculating the plurality of attribute scores for each of the plurality of infographic images comprises:
computing the text alignment attribute score via a normalized Contrastive Language-Image Pretraining (CLIP) Score model, using the textual information and the infographic image;
computing the data adherence attribute score via a Structural Similarity Index (SSIM), using the infographic image and the one or more anchor plots by:
removing background of the infographic image, to generate a clean infographic image;
generating a clean infographic image edge map, one or more anchor plot edge maps by applying a canny edge detection technique on the clean infographic image and the one or more of anchor plots; and
computing the data adherence attribute score by comparing the clean infographic image edge map across the one or more anchor plot edge maps, via the SSIM;
computing the aesthetics attribute score via a Q-Align model, using the infographic image; and
computing the infographic image quality attribute score via a leArning distoRtion maNifold for Image Quality Assessment (ARNIQA) technique, using the infographic image.

14. The system as claimed in claim 8, wherein the steps for calculating the plurality of LLM scores along with the plurality of feedback instructions for each of the plurality of attributes comprises:
feeding a predefined text alignment evaluation prompt, the infographic image, the text alignment attribute score, the AADaT score, and the textual information, to the LLM, to generate the LLM text alignment score along with the plurality of text alignment feedback instructions, wherein the text alignment evaluation prompt comprises a plurality of text alignment evaluation parameters, an expected score range of the LLM text alignment score, and the plurality of text alignment feedback instructions for detailed feedback to improve the generated infographic image;
feeding a predefined data adherence evaluation prompt, the infographic image, the AADaT score, the data adherence attribute score, and the one or more anchor plots, to the LLM, to generate the LLM data adherence score along with the plurality of data adherence feedback instructions, wherein the data adherence evaluation prompt comprises the plurality of data adherence evaluation parameters, the expected score range of the LLM data adherence score, and the plurality of data adherence feedback instructions for detailed feedback to improve the generated infographic image;
feeding a predefined aesthetics evaluation prompt, the infographic image, the AADaT score, the aesthetics attribute score, to the LLM, to generate the LLM aesthetics score along with the plurality of aesthetics feedback instructions, wherein the predefined aesthetics evaluation prompt comprises a plurality of aesthetics evaluation parameters, the expected score range of the LLM aesthetics score, and the plurality of aesthetics feedback instructions for detailed feedback to improve the generated infographic image; and
feeding a predefined image quality evaluation prompt, the infographic image, the AADaT score, the infographic image quality attribute score, to the LLM, to generate the LLM image quality score along with the plurality of image quality feedback instructions, wherein the predefined image quality image quality prompt comprising a plurality of evaluation parameters, the expected score range of the LLM image quality score, and the plurality of image quality feedback instructions for detailed feedback to improve the generated infographic image.

15. One or more non-transitory machine-readable information storage mediums comprising one or more instructions which when executed by one or more hardware processors cause:
receiving an input data comprising a textual information, and one or more tables pertaining to each of a plurality of information resources;
generating one or more anchor plots from the one or more tables, via a Large Language Model (LLM), using a predefined plot prompt, for each of the plurality of information resources;
generating a plurality of infographic images associated with the plurality of information resources, using the textual information and the one or more anchor plots, wherein each of the plurality of infographic images is associated with a plurality of attributes comprising a text alignment attribute, a data adherence attribute, an aesthetics attribute, and an infographic image quality attribute;
computing a plurality of attribute scores of the plurality of attributes for each of the plurality of infographic images, using the textual information, and the one or more anchor plots;
calculating a plurality of Aesthetics Adherence to Data and Text (AADaT) scores for the plurality of infographic images, using the plurality of attribute scores of the plurality of infographic images;
generating a plurality of LLM scores along with a plurality of feedback instructions for the plurality of attributes, using the associated AADaT score for each the plurality of infographic images; and
training an infographic evaluation model with the plurality of infographic images, the plurality of feedback instructions, the plurality of AADaT scores, and the plurality of LLM scores, to generate a trained infographic evaluation model.
